# EUROPEAN PATENT SPECIFICATION

(11) **EP 1 699 842 B1**
(45) Date of publication and mention of the grant of the patent: **07.12.2011**
(21) Application number: 04815528.7
(22) Date of filing: 22.12.2004
(51) Int. Cl.: C08G 18/50, C08G 18/48, C08G 65/333

(54) **PROCESS FOR PRODUCING POLYURETHANE PRODUCTS USING AUTOCATALYTIC TERTIARY AMINE CAPPED POLYETHER POLYOLS**
VERFAHREN ZUR HERSTELLUNG VON POLYURETHANPRODUKTEN UNTER VERWENDUNG VON AUTOKATALYTISCHEN TERT.-AMIN-VERKAPPTEN POLYETHERPOLYOLEN
PROCEDE DE PRODUCTION DE PRODUITS EN POLYURETHANNE AU MOYEN DE POLYOLS DE POLYETHER AUTOCATALYTIQUES A COIFFE AMINE TERTIAIRE

(30) Priority: 23.12.2003 US 531934 P
(43) Date of publication of application: 13.09.2006
(73) Proprietor: Dow Global Technologies LLC, Midland, MI 48674 (US)
(72) Inventor: CASATI, Francois, M., CH-8808 Pfaffikon (CH); SWEDO, Raymond, J., Mt. Prospect, IL 60056 (US); BIRCH, Adrian, J., CH-8810 Horgen (CH); MOORE, David, W., Hebron, IL 60034 (US); GAN, Joseph, F-67100 Strasbourg (FR); WEHMEYER, Richard, M., Lake Jackson, TX 77566 (US); DRUMRIGHT, Ray, E., Midland, MI 48640 (US); SONNEY, Jean-Marie, L., 8834 Schindellegi (CH)
(74) Representative: Raynor, John
(86) International application number: PCT/US2004/043463
(87) International publication number: WO 2005/063841

(56) References cited:
- EP-A- 0 184 467
- EP-A- 0 322 089
- EP-A- 0 414 425
- WO-A-03/016372
- WO-A-03/029320
- US-A- 3 428 708
- US-A- 4 379 914

## Description

The present invention pertains to polyols with tertiary amine end-cappings giving them autocatalytic properties, to processes for their manufacture and to their use in the production of polyurethane products.

Polyether polyols based on the polymerization of alkylene oxides, and/or polyester polyols, are the major components of a polyurethane system together with isocyanates. Polyols can also be filled polyols, such as SAN (Styrene/Acrylonitrile), PIPA (polyisocyanate polyaddition) or PHD (polyurea) polyols, as described in "Polyurethane Handbook", by G. Oertel, Hanser publisher.

Polyurethane systems generally contain additional components such as surfactants, cell regulators, stabilizers, antioxidants, flame retardant additives, eventually fillers, and cross-linkers and/or chain extenders, such as amino-alcohols, as well as catalysts, such as tertiary amines and/or organometallic salts.

Organometallic catalysts, such as lead or mercury salts, can raise environmental issues due to leaching upon aging of the polyurethane products. Others, such as tin salts, are often detrimental to polyurethane aging.

The commonly used tertiary amine catalysts, give rise to several problems, particularly in flexible, semi-rigid and rigid foam applications. Freshly prepared foams using these catalysts often exhibit the typical odor of the amines and give rise to increased fogging (emission of volatile products).

The presence, or formation, of tertiary amine catalyst vapors in polyurethane products having vinyl films or polycarbonate or polyester/polyether elastomer, such as Hytrel* thermoplastic polyester elastomer (Trademark of DuPont) sheets exposed thereto can be disadvantageous. Such products commonly appear in automotive as well as in many domestic applications. Specifically, the tertiary amine catalysts present in polyurethane foams have been linked to the staining of the vinyl film and degradation of polycarbonate or Hytrel sheets. This PVC staining and polycarbonate or Hytrel decomposition problems are especially prevalent in environments wherein elevated temperatures exist for long periods of time, such as in automobile interiors when left in the sunlight.

Various solutions to the above problems have been proposed. One is the use of amine catalysts which contain an isocyanate reactive group, i.e. a hydroxyl or a primary and/or a secondary amine. Such a compound is disclosed in EP 747,407. Other types of reactive monol catalysts are described in U.S. Patents 4,122,038, 4,368,278 and 4,510,269. Since the monols are monofunctional, these reactive amines act as chain stoppers and have a detrimental effect on the polymer build up and affect polyurethane product physical characteristics.

Use of specific amine-initiated polyols is proposed in EP 539,819, in U.S. Patent 5,672,636 and in WO 01/ 58,976.

Various other publications have reported polyols having autocatalytic activity and can replace all or a portion of conventional amine catalysts. See for example U.S. Patent 5,672,636; European Patent Publications EP 0 047371, 1 268 598 and 1 319 034; and WO Publications 03/016372, 03/029320 and 03/055930.

Capping of conventional polyether polyols with N,N-dialkylglycidylamine is claimed in US 3,428,708. While this process gives polyols with autocatalytic activity, it is restricted to dialkylamino groups which are mainly active to catalyze the water-isocyanate reaction and much less the polyol-isocyanate reaction.

Despite the advances made in the art, there continues to be a need for improved catalysts for producing polyurethane products and/or catalysts which can reduce or eliminate the amount of fugitive amine catalysts and/or organometallic salts used in producing polyurethanes.

It is an object.of the present invention to produce polyurethane products based on polyols with tertiary amine end cappings wherein the polyols have autocatalytic properties and are able to replace or reduce the use of conventional, fugitive or reactive tertiary amine catalysts.

It is another objective of the present invention to produce polyurethane products containing a reduced level of organometallic catalyst or to produce such products in the absence of organometallic catalysts. With the reduction of the amount of amine and/or organometallic catalysts needed or elimination of such catalysts, the disadvantages associated with such catalysts can be minimized or avoided.

It is another object of the invention to have a process to obtain an autocatalytic polyether polyol without the need to alkoxylate an amine containing reactive hydrogens, hence without the risk of having by-products formed by decomposition of the amine starter during this alkoxylation step. Such degradation is described, for instance, in DE 100 54 065.

It is a further object of the present invention to provide polyols with tertiary amine end cappings, giving enhanced gelation (polyol-isocyanate reaction) so the industrial manufacturing process of the polyurethane product using these tertiary amine end capped polyols and the physical characteristics of the polyurethane products made therefrom are not adversely affected and may even be improved by the reduction or elimination in the amount of conventional or reactive amine catalysts, and/or by reduction or elimination of organometallic catalysts.

The present invention is a process for the production of a polyurethane product by reaction of a mixture of
(a) at least one organic polyisocyanate with
(b) a polyol composition comprising
   (b1) from 0 to 99 percent by weight of at least one polyol compound having a nominal starter functionality of 2 to 8 and a hydroxyl number from 20 to 800, and
   (b2) from 1 to 100 percent by weight of at least one polyol wherein the polyol has tertiary amine end-capping having autocatalytic function and no carbonate, urethane or ester groups when the tertiary amine is a dialkylamino moiety,
(c) optionally in the presence of one or more polyurethane catalysts, with the proviso that no tin catalyst is used when the tertiary amine of polyol (b2) is a dialkylamino group in a position Beta to the terminal hydroxyl moiety,
(d) optionally in the presence of a blowing agent; and
(e) optionally additives or auxiliary agents known per se for the production of polyurethane foams, elastomers and/or coatings.

In another embodiment, the present invention is a process whereby polyol (b1) or polyol (b2) is all or in part a SAN, PIPA or PHD grafted polyol.

In another embodiment, the present invention is a process whereby tertiary amine capped polyol (b2) has autocatalytic characteristics for the polyurethane, i.e. polyol-isocyanate, reaction.

In another embodiment, the present invention is a process whereby tertiary amine capped polyol (b2) has autocatalytic characteristics for the polyurea, i.e. water-isocyanate, reaction.

In another embodiment, the present invention is a process whereby polyol (b2) contains a mixture of hydroxyl and primary and/or secondary amine end-capping groups.

In another embodiment, the present invention is a process whereby polyol (b1) is totally or partially amine based, i.e. contains nitrogen in the starter or in the chain.

In another embodiment, the present invention is a process whereby polyol (b2) is a blend of at least two polyols with tertiary amine end cappings.

In another embodiment, the present invention is a process as disclosed above wherein the polyisocyanate (a) contains at least one polyisocyanate that is a reaction product of an excess of polyisocyanate with a polyol as defined by (b2).

In a further embodiment, the present invention is a process as disclosed above where the polyol (b) contains a polyol-terminated prepolymer obtained by the reaction of an excess of polyol with a polyisocyanate wherein the polyol is defined by (b2).

In still another embodiment, the present invention is an isocyanate-terminated prepolymer based on the reaction of a polyol as defined by (b2) with an excess of a polyisocyanate.

In yet another embodiment, the present invention is a polyol-terminated prepolymer based on the reaction of a polyisocyanate with an excess of polyol as defined by (b2).

The invention further provides for polyurethane products produced by any of the above processes.

In another embodiment, the invention is a polyol blend comprising (b1) from 0 to 99, preferably 5 to 99, percent by weight of at least one polyol compound having a nominal starter functionality of 2 to 8 and a hydroxyl number from 20 to 800, and

(b2) from 1 to 100, preferably 1 to 95, percent by weight of at least one polyol wherein the polyol has tertiary amine end-capping having autocatalytic function and no carbonate, urethane or ester groups when the tertiary amine is a dialkylamino moiety, or a cyclic amine.

The tertiary amine end capped polyol (b2) is generally a liquid at room temperature and the tertiary amine gives the polyol autocatalytic activity, that is, accelerates the addition reaction of an organic polyisocyanate with a polyol. The addition of a tertiary amine end capped polyol (b2) to a polyurethane reaction mixture reduces or eliminates the need to include a conventional fugitive or reactive tertiary amine catalyst or an organometallic catalyst. The addition of (b2) polyols to polyurethane reaction mixtures containing a conventional polyurethane catalysts can also reduce the mold dwell time in the production of molded foams or improve some polyurethane product properties.

In accordance with the present invention, a process for the production of polyurethane products is provided, whereby polyurethane products of relatively low odor and low emission of VOC's are produced. This is achieved by including in the polyol (b) composition a tertiary amine capped polyol (b2). Such tertiary amine end capped polyol (b2) can also be added as an additional feedstock polyol in the preparation of SAN, PIPA or PHD copolymer polyols and adding them to the polyol mixture (b). Another option is of using tertiary amine end capped polyols (b2) in a prepolymer with a polyisocyanate alone or with an isocyanate and a second polyol.

Tertiary amine end capped polyols (b2) have the following advantages:
1) Having catalytic activity through tertiary amine end-capping, they do not contain by-products as might occur when amine based polyol starters are alkoxylated.
2) The tertiary amine end-capping structure provides better gelation profile, i.e. reaction between polyol and isocyanate, than when the.tertiary amine is part of the polyol starter since there is less steric hindrance.
3) The polyol modified by tertiary amine end capping can also be amine based, i.e. be amine initiated, hence these polyols can have autocatalytic characteristics combined in the starter and in the cappings.

As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups or at least two amine groups per molecule are especially preferred due to their desirable reactivity with polyisocyanates.

Suitable polyols (b1) that can be used to produce polyurethane materials with the tertiary amine end capped polyols (b2) of the present invention are well known in the art and include those described herein and any other commercially available polyol and/or SAN, PIPA or PHD copolymer polyols. Such polyols are described in "Polyurethane Handbook", by G. Oertel, Hanser publishers. Mixtures of one or more polyols and/or one or more copolymer polyols may also be used to produce polyurethane products according to the present invention.

Representative polyols include polyether polyols, polyester polyols, polyhydroxy-terminated acetal resins, hydroxyl-terminated amines and polyamines. Examples of these and other suitable isocyanate-reactive materials are described more fully in U.S. Patent 4,394,491. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double metal cyanide complex (DMC) catalyst, such as zinc hexacyanocobaltate, or quaternary phosphazenium compound. After polyol production, the catalyst is preferably removed, when it is alkaline. The polyol may also be neutralized by the addition of an inorganic or organic acid, such as a carboxylic acid or hydroxy-carboxylic acid.

The polyol or blends thereof employed depends upon the end use of the polyurethane product to be produced. The molecular weight or hydroxyl number of the base polyol may thus be selected so as to result in flexible, semi-flexible, integral-skin or rigid foams, elastomers or coatings, or adhesives when the polymer/polyol produced from the base polyol is converted to a polyurethane product by reaction.with an isocyanate, and depending on the end product in the presence of a blowing agent. The hydroxyl number and molecular weight of the polyol or polyols employed can vary accordingly over a wide range. In general, the hydroxyl number of the polyols employed may range from 15 to 800.

In the production of a flexible polyurethane foam, the polyol is preferably a polyether polyol and/or a polyester polyol. The polyol generally has an average functionality ranging from 2 to 5, preferably 2 to 4, and an average hydroxyl number ranging from 20 to 100 mg KOH/g, preferably from 20 to 70 mgKOH/g. As a further refinement, the specific foam application will likewise influence the choice of base polyol. As an example, for molded foam, the hydroxyl number of the base polyol may be on the order of 20 to 60 with ethylene oxide (EO) capping, and for slabstock foams the hydroxyl number may be on the order of 25 to 75 and is either mixed feed EO/PO (propylene oxide) or is only slightly capped with EO or is 100 percent PO based. For elastomer applications, it will generally be desirable to utilize relatively high molecular weight based polyols, from 2,000 to 8,000, having relatively low hydroxyl numbers, for example, 20 to 50.

It is possible for some of the polyols of (b1) or (b2) to be outside the preferred hydroxyl number, molecular weight, etc. for a particular application provided the average functionality, hydroxyl number etc. of the blend falls within the preferred range.

Typically polyols suitable for preparing rigid polyurethanes include those having an average molecular weight of 100 to 10,000 and preferably 200 to 7,000. Such polyols also advantageously have a functionality of at least 2, preferably 3, and up to 8, preferably up to 6, active hydrogen atoms per molecule. The polyols used for rigid foams generally have a hydroxyl number of 200 to 1,200 and more preferably from 300 to 800.

For the production of semi-rigid foams, it is preferred to use a trifunctional polyol with a hydroxyl number of 30 to 80.

The initiators for the production of polyols (b1) generally have 2 to 8 functional groups that will react with the alkylene oxide. Examples of suitable initiator molecules are water, organic dicarboxylic acids, such as succinic acid, adipic acid, phthalic acid and terephthalic acid and polyhydric, in particular dihydric to octahydric alcohols or dialkylene glycols, for example ethanediol, 1,2- and 1,3-propanediol, diethylene glycol, dipropylene glycol, 1,4-butanediol, 1,6-hexanediol, glycerol, trimethylolpropane, pentaerythritol, sorbitol and sucrose or blends thereof. Other initiators include compounds linear and cyclic amine compounds containing eventually a tertiary amine such as ethanolamine, triethanolamine, and various isomers of toluene diamine, ethylenediamine, N-methyl-1,2-ethanediamine, N-Methyl-1,3-propanediamine, N,N-dimethyl-1,3-diaminopropane, N,N-dimethylethanolamine, 3,3'-diamino-N-methyldipropylamine, N,N-dimethyldipropylenetriamine, aminopropyl-imidazole.

The polyol (b1) used as a blend with (b2) or used for the for the production of (b2) can be based on a tertiary amine. Examples of polyols based on a tertiary amine are described in U.S. Patent 5,672,636; European Patent Publications EP 0 047371, 1 268 598 and 1 319 034; and WO Publications 03/016372, 03/029320 and 03/055930, the disclosures of which are incorporated herein by reference.

Polyol (b1) can also contain a tertiary nitrogen in the chain, by using for instance an alkyl-aziridine as co-monomer with PO and EO.

Polyols with tertiary amine end-cappings (b2) are those which contain a tertiary amino group linked to at least one tip of a polyol chain. These tertiary amines can be of any structure including but not limited to N,N-dialkylamino; N-alkyl; aliphatic, cycloaliphatic, or aromatic amines; or polyamines. The alkyl moiety associated with the amine is generally a C1 to C3 alkyl, more preferably a methyl or ethyl group. For cyclic amines, the total number of atoms in the ring structure is from 4 to 10, preferably from 5 to 8 atom in the ring structure. Mixtures of amines used to make polyol b2 are also within the scope of this invention. The b2 polyols can be made by several reaction mechanisms, as exemplified by the following:

Polyol (b2) can be based on post-modification of conventional hydroxyl capped polyols or can be based on modification of amine terminated polyols, such as JEFFAMINE® polyoxyalkyleneamines (trademark of Huntsman Chemical Corporation).

Polyols (b2a) are obtained by the Williamson type reaction of a conventional polyol with aminoalkyl halides, such as 2-(dimethylamino) ethyl chloride or 3-(dimethylamino)propyl chloride.

Polyols (b2b) are made by reductive amination of conventional polyols using supported catalysts, such as those described in US 5,817,593 and in WO 1997/12,928, and secondary amines or primary, amines, giving tertiary amine end capping, such as, for instance, dimethylamine, isopropylamine, 3-(dimethylamino)-1-propylamine, imidazole, 2-methylimidazole, 1-(3-aminopropyl)-imidazole, 1-methylpiperazine.

Polyols (b2c) are prepared by the reaction of polyols (b1) terminated with acrylate or methacrylate functionality with primary or secondary amines bearing tertiary amine functionality, such as N,N-dimethylaminopropylamine, imidazole, or 2-methylimidazole..Acrylate and methacrylate functional polyols are commercially available or can be prepared by reaction of polyol (b1) with reagents such as acrylic acid or acid chloride, acrylic anhydride, methacrylic acid or acid chloride, or methacrylic anhydride.

Polyols (b2d) are made from reaction of conventional polyols (b1) with glycidylamines. The amine can be cyclic such as with 1-methyl-2-glycidyl-piperazine or dialkyl, in that later case the the proviso is that no tin salt is used in the subsequent foam formulation.

Polyols (b2e) are made from polyols (b1) by capping with glycidyl-acrylate or methacrylate and subsequent reaction of the terminal unsaturation with a primary or secondary amine bearing a tertiary amine group, such as N,N, dimethylaminopropylamine, imidazole, or 2-methylimidazole, according to the Michael addition reaction. Polyols (b2e) differ from polyols (b2c) in that in (b2e) isocyanate reactive functionality is maintained by opening of the glycidyl ether.

Polyols (b2f) based on reaction between polyol of (b1) type with an acid anhydride, such as methylhexahydrophthalic acid anhydride, then reaction with an epoxy bearing acrylate functionality such as glycidylmethacrylate and finally reaction with a secondary or primary amine bearing tertiary nitrogen, such as 2-methylimidazole, imidazole or N,N-dimethylaminopropylamine

Polyols (b2g) are polyols of (b1) type reacted with acrylonitrile and subsequently modified by reductive methylation.

Polyols (b2h) are based on an amine terminated polyol (Jeffamine type polyol) reacted with a tertiary amine based acrylate or a methacrylate, such as 2-(dimethylamino)-ethyl acrylate with an hydroxy containing acrylate or methacrylate, such as 2-hydroxyethyl acrylate or 2-hydroxyethyl methacrylate.

Polyols (b2i) are made by methylating the primary amine groups of an amine terminated polyol (Jeffamine type polyols), using formaldehyde, methanol, hydrogen and catalyst

Polyol (b2j) are based on an amine terminated polyol (Jeffamine type polyol) reacted with hexahydro-1-(3,4,5,6-tetrahydro-7H-azepine-2yl)-1H-azepine, or other compounds described in US 4,469,653, to get polyols end capped with amidine groups.

Polyols (b2k) are prepared from an amine terminated polyol (Jeffamine type polyol) reacted with amine containing ketones, such as 1-methyl-4-piperidinone or quinuclidinone.

Other chemistries are based on modification of nonconventional different from hydroxyl or amine capped, polyols.

Polyols (b2m) are based on reductive amination of aldehyde functional polyol using a catalyst as disclosed in Advanced Synthesis & Catalysis 344(10), 1037-1057 (2002). Polyols capped with aldehyde groups can be made from the reaction of aliphatic epoxy resins with phenolic aldehydes such as salicyladehyde and vannilin.

The percent weight of tertiary amine end capped polyol (b2) in polyol (b) will vary depending on the amount of additional catalyst and/or crosslinker one may desire to add to the reaction mix and to the reaction profile required by the specific application. Generally if a reaction mixture with a base level of catalyst having specified curing time, multiple end capping polyol (b2) is added in an amount so that the curing time is equivalent where the reaction mix contains at least 10 percent by weight less conventional catalyst and/or crosslinker. Preferably the addition of (b2) is added to give a reaction mixture containing 20 percent less catalyst or crosslinker than the base level. More preferably the addition of (b2) will reduce the amount of catalyst or crosslinker required by 30 percent over the base level. For some applications, the most preferred level of (b2) addition is where the need for a conventional, fugitive or reactive tertiary amine catalysts or organometallic or crosslinker salt is eliminated.

While the polyol (b) may be composed of 100 percent of polyol (b2), generally the polyol composition will be a blend of (b1) and (b2) where (b1) comprises at least 5 percent of the blend, preferably at least 10 percent of the blend, and more preferably, at least 20 percent of the blend. Depending on the activity of (b2) and the particular application, the level of (b2) can be from 1 to 5 percent of the total polyol blend, such as for the production of slabstock flexible foam.

In another embodiment, it is preferred to maintain the amount of conventional polyurethane catalyst as the current level in a formulation and to add polyol (b2) to increase the reaction rate, thereby reducing the demold or dwell time.

Polyols pre-reacted with polyisocyanates and tertiary amine end capping polyol (b2) with no free isocyanate functions can also be used in the polyurethane formulation. Isocyanate prepolymers based on tertiary amine end capping polyol (b2) can be prepared with standard equipment, using conventional methods, such a heating the polyol (b2) in a reactor and adding slowly the isocyanate under stirring and then adding eventually a second polyol, or by prereacting a first polyol with a diisocyanate and then adding polyol (b2).

The isocyanates which may be used with the autocatalytic polymers of the present invention include aliphatic, cycloaliphatic, arylaliphatic and aromatic isocyanates. Aromatic isocyanates, especially aromatic polyisocyanates are preferred.

Examples of suitable aromatic isocyanates include the 4,4'-, 2,4' and 2,2'-isomers of diphenylmethane diisocyante (MDI), blends thereof and polymeric and monomeric MDI blends toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used. MDI or TDI based prepolymers can also be used, made either with polyol (b1), polyol (b2) or any other polyol as described heretofore. Isocyanate-terminated prepolymers are prepared by reacting an excess of polyisocyanate with polyols, including aminated polyols or imines/enamines thereof, or polyamines.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof.

The preferred polyisocyantes for the production of rigid or semi-rigid foams are polymethylene polyphenylene isocyanates, the 2,2', 2,4' and 4,4' isomers of diphenylmethylene diisocyanate and mixtures thereof. For the production of flexible foams, the preferred polyisocyanates are the toluene-2,4- and 2,6-diisocyanates or MDI or combinations of TDI/MDI or prepolymers made therefrom.

Isocyanate tipped prepolymer based on polyol (b2) can also be used in the polyurethane formulation.

For rigid foam, the organic polyisocyanates and the isocyanate reactive compounds are reacted in such amounts that the isocyanate index, defined as the number or equivalents of NCO groups divided by the total number of isocyanate reactive hydrogen atom equivalents multiplied by 100, ranges from 80 to less than 500 preferably from 90 to 100 in the case of polyurethane foams, and from 100 to 300 in the case of combination polyurethane-polyisocyanurate foams. For flexible foams, this isocyanate index is generally between 50 and 120 and preferably between 75 and 110.

For elastomers, coating and adhesives the isocyanate index is generally between 80 and 125, preferably between 100 to 110.

For producing a polyurethane-based foam, a blowing agent is generally required. In the production of flexible polyurethane foams, water is preferred as a blowing agent.. The amount of water is preferably in the range of from 0.5 to 10 parts by weight, more preferably from 2 to 7 parts by weight based on 100 parts by weight of the polyol. Carboxylic acids or salts are also used as reactive blowing agents. Other blowing agents can be liquid or gaseous carbon dioxide, methylene chloride, acetone, pentane, isopentane, methylal or dimethoxymethane, dimethylcarbonate. Use of artificially reduced or increased atmospheric pressure can also be contemplated with the present invention.

In the production of rigid polyurethane foams, the blowing agent includes water, and mixtures of water with a hydrocarbon, or a fully or partially halogenated aliphatic hydrocarbon. The amount of water is preferably in the range of from 2 to 15 parts by weight, more preferably from 2 to 10 parts by weight based on 100 parts of the polyol. With excessive amount of water, the curing rate becomes lower, the blowing process range becomes narrower, the foam density becomes lower, or the moldability becomes worse. The amount of hydrocarbon, the hydrochlorofluorocarbon, or the hydrofluorocarbon to be combined with the water is suitably selected depending on the desired density of the foam, and is preferably not more than 40 parts by weight, more preferably not more than 30 parts by weight based on 100 parts by weight of the polyol. When water is present as an additional blowing agent, it is generally present in an amount from 0.5 to 10, preferably from 0.8 to 6 and more preferably from 1 to 4 and most preferably from 1 to 3 parts by total weight of the total polyol composition.

Other blowing agents, such as liquid or gaseous CO2, acetone, or use of artificially reduced pressure, can be used with the present invention.

Hydrocarbon blowing agents are volatile C₁ to C₅ hydrocarbons. The use of hydrocarbons is known in the art as disclosed in EP 421 269 and EP 695 322. Preferred hydrocarbon blowing agents are butane and isomers thereof, pentane and isomers thereof (including cyclopentane), and combinations thereof.

Examples of fluorocarbons include methyl fluoride, perfluoromethane, ethyl fluoride, 1,1-difluoroethane, 1,1,1-trifluoroethane (HFC-143a), 1,1,1,2-tetrafluoroethane (HFC-134a), pentafluoroethane, pentafluoropropane (HFC-245fa), 1,1,3,3-pentafluorobutane (HFC-365mfc), heptafluoropropane (HFC-227ea), difluoromethane, perfluoroethane, 2,2-difluoropropane, 1,1,1-trifluoropropane, perfluoropropane, dichloropropane, difluoropropane, perfluorobutane, perfluorocyclobutane, or combinations thereof. Preferred combinations are those containing a combination of two or more of 245, 365 and 227 blowing agents.

Partially halogenated chlorocarbons and chlorofluorocarbons for use in this invention include methyl chloride, methylene chloride, ethyl chloride, 1,1,1-trichloroethane, 1,1-dichloro-l-fluoroethane (FCFC-141b), 1-chloro-1,1-difluoroethane (HCFC-142b), 1,1-dichloro-2,2,2-trifluoroethane (HCHC-123) and 1-chloro-1,2,2,2-tetrafluoroethane (HCFC-124).

Fully halogenated chlorofluorocarbons include trichloromonofluoromethane (CFC-11) dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. The halocarbon blowing agents may be used in conjunction with low-boiling hydrocarbons such as butane, pentane (including the isomers thereof), hexane, or cyclohexane or with water.

In addition to the foregoing critical components, it is often desirable to employ certain other ingredients in preparing polyurethane polymers. Among these additional ingredients are surfactants, preservatives, flame retardants, colorants, antioxidants, reinforcing agents, stabilizers and fillers, including recycled polyurethane foam.

In making polyurethane foam, it is generally preferred to employ an amount of a surfactant to stabilize the foaming reaction mixture until it cures. Such surfactants advantageously comprise a liquid or solid organosilicone surfactant. Other surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight total polyol (b) are sufficient for this purpose.

One or more catalysts for the reaction of the polyol (and water, if present) with the polyisocyanate can be used. Any suitable urethane catalyst may be used, including tertiary amine compounds, amines with isocyanate reactive groups and organometallic compounds. Preferably the reaction is carried out in the absence of a fugitive amine or an organometallic catalyst or a reduced amount as described above. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethylpiperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate, as well as other organometallic compounds such as are disclosed in U.S. Patent 2,846,408. A catalyst for the trimerization of polyisocyanates, resulting in a polyisocyanurate, such as an alkali metal alkoxide may also optionally be employed herein. The amount of amine catalysts can vary from 0.02 to 5 percent in the formulation or organometallic catalysts from 0.001 to 1 percent in the formulation can be used.

A crosslinking agent or a chain extender may be added, if necessary. The crosslinking agent or the chain extender includes low-molecular weight polyhydric alcohols such as ethylene glycol, diethylene glycol, 1,4-butanediol, and glycerin; low-molecular weight amines such as diethanolamine and triethanolamine; polyamines such as ethylene diamine, xlylenediamine, and methylene-bis(o-chloroaniline). The use of such crosslinking agents or chain extenders is known in the art as disclosed in U.S. Patents 4,863,979 and 4,963,399 and EP 549,120.

When preparing rigid foams for use in construction, a flame retardant is generally included as an additive. Any known liquid or solid flame retardant can be used with the autocatalytic polyols of the present invention. Generally such flame retardant agents are halogen-substituted phosphates and inorganic flame proofing agents. Common halogen-substituted phosphates are tricresyl phosphate, tris(1,3-dichloropropyl phosphate, tris(2,3-dibromopropyl) phosphate and tetrakis (2-chloroethyl)ethylene diphosphate. Inorganic flame retardants include red phosphorous, aluminum oxide hydrate, antimony trioxide, ammonium sulfate, expandable graphite, urea or melamine cyanurate or mixtures of at least two flame retardants. In general, when present, flame retardants are added at a level of from 5 to 50 parts by weight, preferable from 5 to 25 parts by weight of the flame retardant per 100 parts per weight of the total polyol present.

The applications for foams produced by the present invention are those known in the industry. For example rigid foams are used in the construction industry and for insulation for appliances and refrigerators. Flexible foams and elastomers find use in applications such as furniture, shoe soles, automobile seats, sun visors, steering wheels, armrests, door panels, noise insulation parts and dashboards.

Processing for producing polyurethane products are well known in the art. In general components of the polyurethane-forming reaction mixture may be mixed together in any convenient manner, for example by using any of the mixing equipment described in the prior art for the purpose such as described in "Polyurethane Handbook", by G. Oertel, Hanser publisher.

The polyurethane products are either produced continuously or discontinuously, by injection, pouring, spraying, casting, calendering, etc; these are made under free rise or molded conditions, with or without release agents, in-mold coating, or any inserts or skin put in the mold. In case of flexible foams, those can be mono- or dual-hardness.

For producing rigid foams, the known one-shot prepolymer or semi-prepolymer techniques may be used together with conventional mixing methods including impingement mixing. The rigid foam may also be produced in the form of slabstock, moldings, cavity filling, sprayed foam, frothed foam or laminates with other material such as paper, metal, plastics or wood-board. Flexible foams are either free rise and molded while microcellular elastomers are usually molded.

The following examples are given to illustrate the invention and should not be interpreted as limiting in anyway. Unless stated otherwise, all parts and percentages are given by weight.

A description of the raw materials used in the examples is as follows.
- DEOA 85 %: is 85 % pure diethanolamine and 15 % water.
- DMAPA: is 3-dimethylamino-1-propylamine.
- GMA: is dlycidylmethacrylate.
- Dabco DC 5169: is a silicone-based surfactant available from Air Products and Chemicals Inc.
- TEGOSTAB B-8715LF: is a silicone-based surfactant available from Goldschmidt.
- Dabco 33 LV: is a tertiary amine catalyst available from Air Products and Chemicals Inc
- SPECFLEX NC 632: is a 1,700 EW polyoxypropylene polyoxyethylene polyol initiated with a blend of glycerol and sorbitol available from The Dow Chemical Company.
- Voranol CP-6001: is a 6,000 MW triol available from The Dow Chemical Company.
- Voranol CP-1421: is a triol with a high content of ethylene oxide available from The Dow Chemical Company.
- SPECFLEX NC-700: is a 40 percent SAN based copolymer polyol with an average hydroxyl number of 20 available from The Dow Chemical Company.
- Polyol A: is a 1,700 EW propoxylated quadrol initiated with 3,3'-N-methyl-dipropylamine and containing 15 % ethyleneoxide.
- Jeffamine T-5000: is an amine capped triol with a 5,000 MW available from Huntsman Chemical Corporation.
- VORANATE T-80: is TDI 80/20 isocyanate available from The Dow Chemical Company.
- Specflex NE-150: is a MDI prepolymer available from The Dow Chemical Company.

Catalytic and gelation activity of these tertiary amine end capped polyols are measured using BVT (Brookfield Viscosity Test) as follows: 100 grams of polyol is allowed to equilibrate at 25°C and then the catalyst is added. When a combination of polyols is used, their total is 100 grams. Voranate T-80 is then added at a concentration corresponding to an index of 110. The viscosity build up over time is recorded until full gelation is obtained. When total gelation is not obtained 650 seconds after adding Voranate T-80 the percentage of torque is recorded versus the final aimed viscosity of 20,000 mPa.s (corresponding to 100% torque) is recorded. When 20,000 mPa.s are reached before 650s, the exact time is recorded.

All foams were are in the laboratory on the bench by preblending polyols, surfactants, crosslinkers, catalysts and water, conditioned at 25°C. Isocyanate conditioned at 25°C is added under stirring at 3,000 RPM for 5 seconds. At the end of mixing the reactants are poured in a 30x30x10 cm aluminum mold heated at 60°C which is subsequently closed. The mold is sprayed with the release agent Klueber 41-2013 available from Klueber Chemie prior to addition of the foaming components. Foam curing at 4 minutes is assessed by manually demolding the part, looking for internal and external defects. If no defects, the part is rated as OK. Reactivity is measured from the mold exit time, i.e. the time when foaming mass.begins to appear at the mold vent holes.

Free rise reactivity and density are recorded by pouring the reactant in a 10 liters bucket and letting the foam rise without any constraint.

### Example 1

### Production of modified polyether polyol

Specflex NC-632 (869 g) and methylhexahydrophtalic acid anhydride (45 g) are charged in a 1-liter flange top glass reactor equipped with an electrically driven mechanical stirrer, air and nitrogen inlets, sample port, condenser and thermocouple. The reactants are heated to 120°C and 0.97 g of ethyltriphenylphosphonium acetate catalyst is added and the reactor held at 120°C for 30 minutes. Hydroquinone (0.5 g) is added to the reaction mixture followed with glycidylmethacrylate (GMA, 38.3 g). The temperature is held at 100°C for approximately 120 minutes and samples are taken periodically to check for epoxy content. When the epoxy content < 0.5 wt%, 2-methylimidazole (21 g) is added and the reactor temperature held at 120°C for 90 minutes. Samples are periodically taken to check for resin viscosity by ICI cone/plate. When the viscosity reaches a plateau value (approximately 3 Pa.s at 25°C) the final product has about 4,000 ppm of unreacted 2-methylimidazole.

### Example 2

### Production of modified polyether polyol

Specflex NC-632 (855.5 g) and methylhexahydrophtalic acid anhydride (65.9 g) are charged in a 1-liter flange top glass reactor equipped as per Example 1. The reactants are heated to 110°C and 0.15 g of ethyltriphenylphosphonium acetate catalyst is added. After 50 minutes, 0.5 g of hydroquinone is added to the reaction mixture followed by glycidylmethacrylate (GMA, 58.6 g). The reactor is held at 115°C for 120 minutes and samples are taken periodically to check for epoxy content. When the epoxy content is below 0.5 wt%, 3-dimethylamino-1-propylamine (20 g) is added and the temperature held at 115-120°C for 60 minutes. Samples are taken periodically to check for resin viscosity by ICI cone/plate. When the viscosity reaches a plateau value, the product has a final viscosity of 3 Pa.s at 25°C and contains 300 ppm of un-reacted DMAPA.

### Example 3

### modification of acrylate polyol

A 100 ml single neck round bottom flask equipped with magnetic stir bar and condenser is charged with 23g of propylene oxide monoacrylate with a stated Mn content of approximately 475 g/mol (Aldrich), 3.3g (48.4 mmol) of imidazole and 25 ml of methanol. The reaction mixture is stirred for 15 minutes at room temperature under a nitrogen atmosphere after which time a clear, homogeneous solution results. The reaction flask is then placed in oil bath held at 40°C. The progress of the reaction is monitored by 1 H NMR. An additional 8.9 g of polypropylene oxide monoacrylate is added in aliquots over the course of several hours to the reaction mixture. Upon consumption of all imidazole, the reaction mixture is concentrated by removal of the methanol to yield 35.1 g of product. The product contains 1.38 mmol of imidazole derived species/g of product.

### Example 4

### Modification of acrylate polyol

A flask as per Example 3 is charged with 31.9 g of polypropylene oxide monoacrylate, 3.97g (48.4 mmol) of 2-methylimidazole, and 25 ml of methanol. The reaction mixture is stirred for 5 minutes at room temperature under a nitrogen atmosphere after which a clear, colorless, homogeneous solution results. The reaction flask is then placed in an oil bath held at 40°C. The progress of the reaction is monitored by 1H NMR. An additional 4.2 g of polypropylene oxide monoacrylate is added in aliquots over the course of several hours to the reaction mixture. Upon consumption of all 2-methylimidazole, the reaction mixture is concentrated by removal of methanol to yield 39.5 g of product. The product contains 1.21 mmol of 2-methylimidazole derived species/g of product.

### Example 5

### Modification of a JEFFAMINE polyoxyalkyleneamine

A solution of Jeffamine T-5000 (319.5 g) in methanol (333.3 g) and Formcel (38.3 g Celanese) are charged to a 2 liter, stainless steel, stirred Parr autoclave charged with wet, unwashed Raney Nickel catalyst (54.6 g, Davison). The autoclave is purged 3 times with nitrogen and then 3 times with hydrogen, and then pressurized to 500 psig with hydrogen. The reaction mixture is heated to 120°C while stirring at 800 RPM. When the set temperature was reached, hydrogen pressure is increased to and maintained at 750 psig. After a reaction time of 3.75 hours, the autoclave is cooled to 25°C, vented and purged with nitrogen.

The reaction mixture is filtered through a glass microfiber filter to remove catalyst. A clear, colorless filtrate is obtained (772.8 g).

The solvents (methanol and water) are removed from the filtrate by rotary evaporation at a bath temperature of 80°C and ca. 5 mm Hg pressure. The final methylated Jeffamine T-5000 product is a viscous, colorless liquid (309.4 g).

FTIR analyses shows the asymmetric and symmetric stretching bands of the NH2 groups observed at 3379 and 3314 cm-1 in Jeffamine T-5000 are completely absent in the methylated product.

### Examples 6, 7, 8, 9 and 10

Reactivity of the polyol-isocyanate reaction is measured using the BVT (Brookfield viscosity test). Experimental polyols are blended with Specflex NC-632 as per the formulations given in Table 1. Voranate T-80 is the isocyanate.

**Table 1.**

| Example | Polyol (b2) | Level (%) | Time to gelation (s) |
|---|---|---|---|
| 6 | Example 1 | 10 | 550 |
| 7 | Example 2 | 5 | 240 |
| 8 | Example 3 | 7.4 | 350 |
| 9 | Example 4 | 8.4 | 180 |
| 10 | Example 5 | 40 | 550 |
| 10* | Dabco 33 LV | 0.26 | 330 |

| | | | |
|---|---|---|---|
| 10* comparative example, not part of this invention | | | |

These examples, 6 to 10, confirm that tertiary amine capped polyols of examples 1 to 5 are gelling catalysts, performing as well as Dabco 33 LV, the standard gelling, fugitive, amine catalyst.

### Example 11

### Foam production with polyol of example 2

| | | |
|---|---|---|
| Formulation: | Polyol Example 2 | 20 |
| | Polyol A | 50 |
| | Specflex NC-700 | 30 |
| | Water | 3.5 |
| | DEOA 85 % | 0.8 |
| | Dabco DC-5169 | 0.6 |
| | Voranate T-80 | index 100 |

| Free Rise Reactivity: | | |
|---|---|---|
| | Cream time | 5 s |
| | Gel time | 54 s |
| | Rise time | 139 s |

Foam did not settle and is cut to measure 28.4 kg/m3 core density.

### Examples 12

### Foam production with polyol of example 5

| | |
|---|---|
| Formulation: | Polyol Example 5 20 |
| | Specflex NC-632 20 |
| | Voranol CP 6001 48 |
| | Voranol CP 1421 2 |
| | Tegostab B-8715LF 0.6 |
| | Dabco 33 LV 0.5 |
| | Water 3.7 |
| | Specflex NE-150 58.2 |

Molded part filled in 37 s. Demolding time 4 minutes. Molded density 45.8 kg/m3

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. A process for the production of a polyurethane product by reaction of a mixture of
(a)at least one organic polyisocyanate with
(b) a polyol composition comprising
(b1) from 0 to 99 percent by weight of at least one polyol compound having a nominal starter functionality of 2 to 8 and a hydroxyl number from 20 to 800, and
(b2) from 1 to 100 percent by weight of at least one polyol wherein the polyol has tertiary amine end-capping having autocatalytic function and no carbonate, urethane or ester groups when the tertiary amine is a dialkylamino moiety,
(c) optionally in the presence of one or more polyurethane catalysts, with the proviso that no tin catalyst is used when the tertiary amine of polyol (b2) is a dialkylamino group in a position Beta to a terminal hydroxyl moiety,
(d) optionally in the presence of a blowing agent; and
(e) optionally additives or auxiliary agents known per se for the production of polyurethane foams, elastomers and/or coatings.

2. The process of Claim 1 wherein (b) is a polyol blend containing 5 to 99 percent by weight of (b1) and 1 to 95 percent by weight of (b2).

3. A process for the production of a flexible polyurethane foam by reaction of a mixture of
(a) at least one organic polyisocyanate with
(b) a polyol composition having an average functionality of 3 to 6 and an average hydroxyl number of 20 to 100 wherein the polyol comprises, based on the total amount of polyol component (b)
(b1) from 5 to 99 percent by weight of a polyol having a functionality of 2 to 8 and a hydroxyl number of 20 to 100 and
(b2) from 1 to 95 percent by weight of at least one polyol wherein the polyol has tertiary amine end-capping having autocatalytic function and no carbonate, urethane or ester groups when the tertiary amine is a dialkylamino moiety,
(c) in the presence of a blowing agent,
(d) optionally in the presence of one or more polyurethane catalysts, with the proviso that no tin catalyst is used when the tertiary amine of polyol (b2) is a dialkylamino group in a position Beta to a terminal hydroxyl moiety, and
(e) optionally additives or auxiliary agents known per se for the production of a flexible polyurethane foam.

4. The process of Claim 3 wherein the blowing agent is water in an amount from 0.5 to 10 parts by weight of component (b).

5. The process of Claim 4 wherein the blowing agent further comprises carbon dioxide added either as a gas or as a liquid.

6. The process of Claim 3 wherein a carboxylic or hydroxyl carboxylic acid is added to the reaction mixture.

7. The process of Claim 3 wherein polyol (b2) is a polyol having a functionality of 2 to 8 and a hydroxyl number of 20 to 100 which is end-capped by reaction with a monoalkyl amine, a dialkyl amine, a cyclic amine or a polyamine wherein the alkyl group is a C1 to C3 alkyl group and the cyclic amine is a cycloaliphatic or aromatic amine containing 4 to 10 atoms in the ring.

8. The process of Claim 7 wherein the polyol (b2) is formed by reaction of the polyol with dimethylamine, isopropylamine, 3-(dimethylamino)-1-propylamine, imidazole, 2-methylimidazole, 1-(3-aminopropyl)-imidazole, 1-methyl piperazine or N,N-dimethyl aminopropylamine.

9. The process of Claim 8 wherein the polyol (b2) is formed by reaction of the polyol with dimethylamine, 2-methylimidazole or imidazole.

10. The process of Claim 7 wherein the polyol (b2) is formed by reaction of the polyol with an acrylate or methacrylate.

11. The process of Claim 7 wherein the polyol (b2) is formed by reaction of the polyol with an aminoalkyl halide.

12. The process of Claim 7 wherein the polyol (b2) is formed by reaction of the polyol with a glycidylamine.

13. The process of Claim 7 wherein the polyol is a polyol containing a primary amine group and (b2) is formed by methylating at least a portion of the primary amine groups.

14. The process of any one of claims 7 to 13 wherein the polyisocyanate is a toluene diisocyanate.

15. The process of any one of Claim 3 or 6 to 13 for the production of a foam containing an integral skin.

16. The process of any one of claims 3 to 14 wherein the polyisocyanate (a) contains at least one polyisocyanate that is a reaction product of an excess of polyisocyanate with polyol (b1), (b2) or a mixture thereof.

17. A polyol blend comprising
(i) from 5 to 99 percent by weight of at least one polyol compound having a nominal starter functionality of 2 to 8 and a hydroxyl number from 20 to 800, and
(ii) from 1 to 100 percent by weight of at least one polyol wherein the polyol has tertiary amine end-capping and contains no carbonate, urethane or ester groups when the tertiary amine is a dialkylamino moiety.

## Patentansprüche

1. Verfahren zur Herstellung eines Polyurethanprodukts durch Umsetzen einer Mischung von
(a) mindestens einem organischen Polyisocyanat mit
(b) einer Polyolzusammensetzung, umfassend
(b1) von 0 bis 99 Gew.-% mindestens einer Polyolverbindung mit einer nominalen Ausgangsfunktionalität von 2 bis 8 und einer Hydroxylzahl von 20 bis 800, und
(b2) von 1 bis 100 Gew.-% mindestens eines Polyols, wobei das Polyol mit einem tertiären Amin endverkappt ist, das eine autokatalytische Funktion besitzt und keine Carbonat-, Urethan- oder Estergruppen, wenn das tertiäre Amin eine Dialkylaminoeinheit ist,
(c) optional in Gegenwart eines oder mehrerer Polyurethankatalysatoren, mit der Maßgabe, dass kein Zinnkatalysator verwendet wird, wenn das tertiäre Amin von Polyol (b2) eine Dialkylaminogruppe in beta-Stellung zu einer terminalen Hydroxyleinheit ist,
(d) optional in Gegenwart eines Treibmittels; und
(e) optional an sich bekannten Zusatzstoffen oder Hilfsstoffen für die Herstellung von Polyurethanschaumstoffen, Elastomeren und/oder Beschichtungen.

2. Verfahren nach Anspruch 1, wobei (b) eine Polyolmischung ist, die 5 bis 99 Gew.-% von (b1) und 1 bis 95 Gew.-% von (b2) enthält.

3. Verfahren zur Herstellung eines Polyurethanweichschaums durch Umsetzen einer Mischung von
(a) mindestens einem organischen Polyisocyanat mit
(b) einer Polyolzusammensetzung mit einer durchschnittlichen Funktionalität von 3 bis 6 und einer durchschnittlichen Hydroxylzahl von 20 bis 100, wobei das Polyol, bezogen auf die Gesamtmenge der Polyolkomponente (b), Folgendes umfasst:
(b1) von 5 bis 99 Gew.-% eines Polyols mit einer Funktionalität von 2 bis 8 und einer Hydroxylzahl von 20 bis 100, und
(b2) von 1 bis 95 Gew.-% mindestens eines Polyols, wobei das Polyol mit einem tertiären Amin endverkappt ist, das eine autokatalytische Funktion besitzt und keine Carbonat-, Urethan- oder Estergruppen, wenn das tertiäre Amin eine Dialkylaminoeinheit ist,
(c) optional in Gegenwart eines Treibmittels,
(d) optional in Gegenwart eines oder mehrerer Polyurethankatalysatoren, mit der Maßgabe, dass kein Zinnkatalysator verwendet wird, wenn das tertiäre Amin von Polyol (b2) eine Dialkylaminogruppe in beta-Stellung zu einer terminalen Hydroxyleinheit ist, und
(e) optional an sich bekannten Zusatzstoffen oder Hilfsstoffen für die Herstellung eines Polyurethanweichschaums.

4. Verfahren nach Anspruch 3, wobei das Treibmittel Wasser in einer Menge von 0,5 bis 10 Gewichtsteilen von Komponente (b) ist.

5. Verfahren nach Anspruch 4, wobei das Treibmittel ferner als Gas oder als Flüssigkeit zugesetztes Kohlendioxid umfasst.

6. Verfahren nach Anspruch 3, wobei eine Carbon- oder Hydroxycarbonsäure dem Reaktionsgemisch zugesetzt wird.

7. Verfahren nach Anspruch 3, wobei Polyol (b2) ein Polyol mit einer Funktionalität von 2 bis 8 und einer Hydroxylzahl von 20 bis 100 ist, das durch Umsetzung mit einem Monoalkylamin, einem Dialkylamin, einem cyclischen Amin oder einem Polyamin endverkappt wird, wobei die Alkylgruppe eine C₁- bis C₃-Alkylgruppe ist und das cyclische Amin ein cycloaliphatisches oder aromatisches Amin ist, das 4 bis 10 Atome in dem Ring enthält.

8. Verfahren nach Anspruch 7, wobei das Polyol (b2) durch Umsetzung des Polyols mit Dimethylamin, Isopropylamin, 3-(Dimethylamino)-1-propylamin, Imidazol, 2-Methylimidazol, 1-(3-Aminopropyl)-imidazol, 1-Methylpiperazin oder N,N-Dimethylaminopropylamin gebildet ist.

9. Verfahren nach Anspruch 8, wobei das Polyol (b2) durch Umsetzung des Polyols mit Dimethylamin, 2-Methylimidazol oder Imidazol gebildet ist.

10. Verfahren nach Anspruch 7, wobei das Polyol (b2) durch Umsetzung des Polyols mit einem Acrylat oder Methacrylat gebildet ist.

11. Verfahren nach Anspruch 7, wobei das Polyol (b2) durch Umsetzung des Polyols mit einem Aminoalkylhalogenid gebildet ist.

12. Verfahren nach Anspruch 7, wobei das Polyol (b2) durch Umsetzung des Polyols mit einem Glycidylamin gebildet ist.

13. Verfahren nach Anspruch 7, wobei das Polyol ein Polyol ist, das eine primäre Amingruppe enthält, und (b2) durch Methylierung mindestens eines Teils der primären Amingruppen gebildet ist.

14. Verfahren nach einem der Ansprüche 7 bis 13, wobei das Polyisocyanat ein Toluoldiisocyanat ist.

15. Verfahren nach einem der Ansprüche 3 oder 6 bis 13 für die Herstellung eines Schaums ist, der eine integrale Haut enthält.

16. Verfahren nach einem der Ansprüche 3 bis 14, wobei das Polyisocyanat (a) mindestens ein Polyisocyanat enthält, das ein Reaktionsprodukt eines Überschusses an Polyisocyanat mit Polyol (b1), (b2) oder einer Mischung davon ist.

17. Polyolmischung, die Folgendes umfasst:
(i) von 5 bis 99 Gew.-% mindestens einer Polyolverbindung mit einer nominalen Ausgangsfunktionalität von 2 bis 8 und einer Hydroxylzahl von 20 bis 800, und
(ii) von 1 bis 100 Gew.-% mindestens eines Polyols, wobei das Polyol mit einem tertiären Amin endverkappt ist und keine Carbonat-, Urethan- oder Estergruppen enthält, wenn das tertiäre Amin eine Dialkylaminoeinheit ist.

## Revendications

1. Procédé de production d'un produit en polyuréthane, par réaction d'un mélange
a) d'au moins un polyisocyanate organique
b) avec une composition de polyols comprenant
b1) de 0 à 99 % en poids d'au moins un polyol présentant un nombre nominal de groupes fonctionnels amorceurs de 2 à 8 et un indice d'hydroxyle de 20 à 800,
b2) et de 1 à 100 % en poids d'au moins un polyol qui comporte une coiffe terminale à groupe amine tertiaire à fonction auto-catalytique et qui ne comporte pas de groupes carbonate, uréthane ou ester si le groupe amine tertiaire est un groupe dialkyl-amino,
c) en option, en présence d'un ou plusieurs catalyseur(s) de formation de polyuréthanes, sous réserve qu'aucun catalyseur à l'étain ne soit utilisé si le groupe amine tertiaire du polyol (b2) est un groupe dialkyl-amino situé en position β par rapport à un groupe hydroxyle terminal,
d) en option, en présence d'un agent d'expansion,
e) et en option, en présence d'adjuvants ou d'agents auxiliaires connus en soi pour la production de mousses, d'élastomères et/ou de revêtements en polyuréthane.

2. Procédé conforme à la revendication 1, dans lequel le composant (b) est un mélange de polyols contenant de 5 à 99 % en poids de polyol (b1) et de 1 à 95 % en poids de polyol (b2).

3. Procédé de production d'une mousse souple en polyuréthane, par réaction d'un mélange
a) d'au moins un polyisocyanate organique
b) avec une composition de polyols qui présente un nombre moyen de groupes fonctionnels de 3 à 6 et un indice moyen d'hydroxyle de 20 à 100, lesquels polyols comprennent, par rapport à la quantité totale du composant (b) :
b1) de 5 à 99 % en poids d'un polyol présentant un nombre de groupes fonctionnels de 2 à 8 et un indice d'hydroxyle de 20 à 100,
b2) et de 1 à 95 % en poids d'au moins un polyol qui comporte une coiffe terminale à groupe amine tertiaire à fonction auto-catalytique et qui ne comporte pas de groupes carbonate, uréthane ou ester si le groupe amine tertiaire est un groupe dialkyl-amino,
c) en présence d'un agent d'expansion,
d) en option, en présence d'un ou plusieurs catalyseur(s) de formation de polyuréthanes, sous réserve qu'aucun catalyseur à l'étain ne soit utilisé si le groupe amine tertiaire du polyol (b2) est un groupe dialkyl-amino situé en position β par rapport à un groupe hydroxyle terminal,
e) et en option, en présence d'adjuvants ou d'agents auxiliaires connus en soi pour la production d'une mousse souple en polyuréthane.

4. Procédé conforme à la revendication 3, dans lequel l'agent d'expansion est de l'eau, utilisée en une quantité de 0,5 à 10 parties en poids, par rapport au composant (b).

5. Procédé conforme à la revendication 4, dans lequel l'agent d'expansion comprend en outre du dioxyde de carbone, ajouté à l'état de gaz ou de liquide.

6. Procédé conforme à la revendication 3, dans lequel on ajoute au mélange réactionnel un acide carboxylique ou un acide hydroxy-carboxylique.

7. Procédé conforme à la revendication 3, dans lequel le polyol (b2) est un polyol qui comporte de 2 à 8 groupes fonctionnels, qui présente un indice d'hydroxyle de 20 à 100, et qui a été doté d'une coiffe terminale par réaction avec une monoalkyl-amine, une dialkyl-amine, une amine cyclique ou une polyamine, étant entendu que les groupes alkyle sont des groupes alkyle en C₁₋₃ et que l'amine cyclique est une amine cycloaliphatique ou aromatique dont le cycle comporte de 4 à 10 atomes.

8. Procédé conforme à la revendication 7, pour lequel le polyol (b2) a été formé par réaction du polyol avec de la diméthyl-amine, de l'isopropyl-amine, de la 3-(diméthyl-amino)-1-propyl-amine, de l'imidazole, du 2-méthyl-imidazole, du 1-(3-amino-propyl)-imidazole, de la 1-méthyl-pipérazine ou de la N,N-diméthyl-amino-propyl-amine.

9. Procédé conforme à la revendication 8, pour lequel le polyol (b2) a été formé par réaction du polyol avec de la diméthyl-amine, de l'imidazole ou du 2-méthyl-imidazole.

10. Procédé conforme à la revendication 7, pour lequel le polyol (b2) a été formé par réaction du polyol avec un acrylate ou un méthacrylate.

11. Procédé conforme à la revendication 7, pour lequel le polyol (b2) a été formé par réaction du polyol avec un halogénure d'amino-alkyle.

12. Procédé conforme à la revendication 7, pour lequel le polyol (b2) a été formé par réaction du polyol avec une glycidyl-amine.

13. Procédé conforme à la revendication 7, pour lequel le polyol est un polyol comportant un groupe amine primaire, et le composant (b2) a été formé par méthylation d'au moins une partie de ces groupes amine primaire.

14. Procédé conforme à l'une des revendications 7 à 13, dans lequel le polyisocyanate est un diisocyanato-toluène.

15. Procédé conforme à l'une des revendications 3 et 6 à 13, en vue de la production d'une mousse dotée d'une peau qui en fait partie intégrante.

16. Procédé conforme à l'une des revendications 3 à 14, dans lequel le polyisocyanate (a) contient au moins un polyisocyanate qui est un produit de réaction d'un polyisocyanate en excès avec un polyol (b1) ou (b2) ou avec un mélange de tels polyols.

17. Mélange de polyols comprenant :
b1) de 5 à 99 % en poids d'au moins un polyol présentant un nombre nominal de groupes fonctionnels amorceurs de 2 à 8 et un indice d'hydroxyle de 20 à 800,
b2) et de 1 à 100 % en poids d'au moins un polyol qui comporte une coiffe terminale à groupe amine tertiaire et qui ne comporte pas de groupes carbonate, uréthane ou ester si le groupe amine tertiaire est un groupe dialkyl-amino.
